# EUROPÄISCHE PATENTANMELDUNG

(11) **EP 1 936 140 A1**
(43) Veröffentlichungstag der Anmeldung: **25.06.2008**
(21) Anmeldenummer: 06126595.5
(22) Anmeldetag: 20.12.2006
(51) Int. Cl.: F01N 11/00

(54) **Verfahren zur Überwachung eines Abgasnachbehandlungssystems einer Brennkraftmaschine**

(71) Anmelder: Ford Global Technologies, LLC, Dearborn, MI 48126 (US)
(72) Erfinder: Yacoub, Yasser Mohammed Sayed, 50858 Köln (DE); Schneider, Matthew, 52064 Aachen (DE)
(74) Vertreter: Drömer, Hans-Carsten

(57) **Zusammenfassung**

Die Erfindung betrifft ein Verfahren zur Überwachung eines Abgasnachbehandlungssystems (4) einer Brennkraftmaschine (1) bei dem
• stromaufwärts des Abgasnachbehandlungssystems (4) eine erste Lambda-Sonde (3) zur Erfassung des Luftverhältnisses (λ_{1,mess}) angeordnet wird,
• stromabwärts des Abgasnachbehandlungssystems (4) eine zweite Lambda-Sonde (5) zur Erfassung des Luftverhältnisses (λ_{2,mess}) angeordnet wird,
• zur Überprüfung der Funktionstüchtigkeit des Abgasnachbehandlungssystems (4) die Brennkraftmaschine (1) in einen Betrieb überführt wird, in dem die aus dem mindestens einen Zylinder abgeführten Abgase eine derart hohe Konzentration an unverbrannten Kohlenwasserstoffen (HC) aufweisen, daß die erste Sonde (3) fehlerhaft arbeitet, in der Art, daß diese erste Sonde (3) ein - im Vergleich zu dem tatsächlich im Abgas vorliegenden Luftverhältnis (λₜₐₜ) - höheres Luftverhältnis (λ_{1,mess}) anzeigt, und
• von einer Funktionsuntüchtigkeit des Abgasnachbehandlungssystems (4) ausgegangen wird, falls die beiden Luftverhältnisse (λ_{1,mess},λ_{2,mess}) im wesentlichen gleichgroß sind (λ_{1,mess}/λ_{2,mess}≈1), und
• von einer zumindest teilweisen Funktionstüchtigkeit des Abgasnachbehandlungssystems (4) ausgegangen wird, falls die beiden Luftverhältnisse(λ_{1,mess},λ_{2,mess}) unterschiedlich groß sind mit (λ_{1,mess}/λ_{2,mess}>1).

## Beschreibung

Die Erfindung betrifft ein Verfahren zur Überwachung eines Abgasnachbehandlungssystems einer Brennkraftmaschine mit mindestens einem Zylinder, welches die Fähigkeit aufweist, unverbrannte Kohlenwasserstoffe (HC) zu oxidieren, und in einer Abgasleitung zum Abführen der Abgase aus dem mindestens einen Zylinder vorgesehen ist.

Nach dem Stand der Technik werden Brennkraftmaschinen zur Reduzierung der Schadstoffemissionen mit verschiedenen Abgasnachbehandlungssystemen ausgestattet. Zwar findet auch ohne zusätzliche Maßnahmen während der Expansion und des Ausschiebens der Zylinderfüllung bei einem ausreichend hohen Temperaturniveau und dem Vorhandensein genügend großer Sauerstoffmengen eine Oxidation der unverbrannten Kohlenwasserstoffe (HC) und von Kohlenmonoxid (CO) statt. Jedoch müssen in der Regel besondere Reaktoren und/oder Filter im Abgastrakt vorgesehen werden, um die Schadstoffemissionen unter sämtlichen Betriebsbedingungen spürbar zu reduzieren.

Bei Ottomotoren kommen katalytische Reaktoren zum Einsatz, die unter Verwendung katalytischer Materialien, welche die Geschwindigkeit bestimmter Reaktionen erhöhen, eine Oxidation von HC und CO auch bei niedrigen Temperaturen sicherstellen. Sollen zusätzlich Stickoxide reduziert werden, kann dies durch den Einsatz eines Dreiwegkatalysators erreicht werden, der dazu aber einen in engen Grenzen ablaufenden stöchiometrischen Betrieb (λ ≈ 1) des Ottomotors erfordert. Dabei werden die Stickoxide NOₓ mittels der vorhandenen nicht oxidierten Abgaskomponenten, nämlich den Kohlenmonoxiden und den unverbrannten Kohlenwasserstoffen, reduziert, wobei gleichzeitig diese Abgaskomponenten oxidiert werden.

Bei Brennkraftmaschinen, die mit einem Luftüberschuß betrieben werden, beispielsweise im Magerbetrieb arbeitende Ottomotoren, aber auch direkteinspritzende Dieselmotoren und auch direkteinspritzende Ottomotoren, können die im Abgas befindlichen Stickoxide prinzipbedingt d. h. aufgrund der fehlenden Reduktionsmittel nicht reduziert werden.

Zur Oxidation der unverbrannten Kohlenwasserstoffe (HC) und von Kohlenmonoxid (CO) wird daher im Abgassystem ein Oxidationskatalysator vorgesehen. Sowohl diese für direkteinspritzende Brennkraftmaschinen verwendeten Oxidationskatalysatoren als auch die bei herkömmlichen Ottomotoren eingesetzten Drei-Wege-Katalysatoren benötigen eine bestimmte Betriebstemperatur, um die Schadstoffe in ausreichendem Maße zu konvertieren und die Schadstoffemissionen spürbar zu reduzieren. Die Drei-Wege-Katalysatoren sollen im Rahmen der vorliegenden Erfindung zu den Oxidationskatalysatoren gezählt werden.

Sollen lediglich die üblicherweise im Abgas enthaltenen unverbrannten Kohlenwasserstoffe bzw. das vorliegende Kohlenmonoxid oxidiert werden, kann eine Mindestbetriebstemperatur von 150°C bis 250°C als ausreichend angesehen werden. Insbesondere aufgrund der hohen HC-Emissionen während der Kaltstartphase ist der Oxidationskatalysator in der Regel das Abgasnachbehandlungssystem, das am nächsten am Auslaß der Brennkraftmaschine angeordnet ist und zuerst von den heißen Abgasen durchströmt wird.

Zur Reduzierung der Stickoxide werden u. A. selektive Katalysatoren - sogenannte SCR-Katalysatoren - eingesetzt, bei denen gezielt Reduktionsmittel in das Abgas eingebracht wird, um die Stickoxide selektiv zu vermindern. Als Reduktionsmittel kommen neben Ammoniak und Harnstoff auch unverbrannte Kohlenwasserstoffe zum Einsatz. Letzteres wird auch als HC-Anreicherung bezeichnet, wobei die unverbrannten Kohlenwasserstoffe direkt in den Abgastrakt eingebracht werden oder aber durch innermotorische Maßnahmen, beispielsweise durch eine Nacheinspritzung von zusätzlichem Kraftstoff in den Brennraum nach der eigentlichen Verbrennung, zugeführt werden. Dabei soll der nacheingespritzte Kraftstoff nicht im Brennraum durch die noch ablaufende Hauptverbrennung oder aber durch die - auch nach Beendigung der Hauptverbrennung - hohen Verbrennungsgastemperaturen gezündet werden, sondern während des Ladungswechsels in den Abgastrakt eingeleitet werden.

Grundsätzlich können die Stickoxidemissionen auch mit einem sogenannten Stickoxidspeicherkatalysator (LNT - Lean NOₓ Trap) reduziert werden.

Dabei werden die Stickoxide zunächst - während eines mageren Betriebs der Brennkraftmaschine - im Katalysator absorbiert d. h. gesammelt und gespeichert, um dann während einer Regenerationsphase beispielsweise mittels eines unterstöchiometrischen Betriebs (beispielsweise λ < 0,95) der Brennkraftmaschine bei Sauerstoffmangel reduziert zu werden, wobei die im Abgas befindlichen unverbrannten Kohlenwasserstoffe als Reduktionsmittel dienen. Weitere innermotorische Möglichkeiten zur Anreicherung des Abgases mit Reduktionsmittel, insbesondere mit unverbrannten Kohlenwasserstoffen, bietet die Abgasrückführung (AGR) und - bei Dieselmotoren - die Drosselung im Ansaugtrakt. Wie bereits für die SCR-Katalysatoren weiter oben ausgeführt, kann eine Anreicherung des Abgases mit unverbrannten Kohlenwasserstoffen auch mittels Nacheinspritzung von Kraftstoff realisiert werden, was ebenfalls als innermotorische Maßnahme anzusehen ist. Ein Nachteil dieser Vorgehensweise ist insbesondere die Ölverdünnung. Auf innermotorische Maßnahmen kann verzichtet werden, wenn das Reduktionsmittel direkt in den Abgastrakt eingebracht wird, beispielsweise durch Einspritzen von zusätzlichem Kraftstoff stromaufwärts des LNT.

Während der Regenerationsphase werden die Stickoxide freigegeben und im wesentlichen in Stickstoffdioxid (N₂), Kohlenstoffdioxid (CO₂) und Wasser (H₂O) umgewandelt. Die Temperatur des Speicherkatalysators (LNT) sollte vorzugsweise in einem Temperaturfenster zwischen 200°C und 450°C liegen, so daß einerseits eine schnelle Reduktion sichergestellt wird und andererseits keine Desorption ohne Konvertierung der wieder freigegebenen Stickoxide (NOₓ) stattfindet, was durch zu hohe Temperaturen ausgelöst werden kann.

Eine Schwierigkeit bei der Verwendung eines LNT ergibt sich aus dem im Abgas enthaltenen Schwefel, der ebenfalls im LNT absorbiert wird und im Rahmen einer sogenannten Entschwefelung regelmäßig entfernt werden muß. Hierfür muß der LNT auf hohe Temperaturen, üblicherweise zwischen 600°C und 700 °C, erwärmt und mit einem Reduktionsmittel versorgt werden.

Die für eine Entschwefelung erforderlichen hohen Temperaturen können den Speicherkatalysator schädigen, zur thermischen Alterung des Katalysators beitragen und die gewollte Konvertierung der Stickoxide gegen Ende seiner Lebensdauer nachteilig beeinflussen. Das Speichervermögen des LNT bzw. die Fähigkeit, Stickoxide zu speichern, nimmt mit zunehmender Betriebsdauer ab, was unter anderem auf die Kontamination des Speicherkatalysators mit Schwefel d. h. auf die Einlagerung von Schwefel im LNT zurückzuführen ist, aber auch auf thermische Alterung infolge der hohen Temperaturen.

Im Sinne der vorliegenden Anmeldung ist - neben dem zuvor beschriebenen Oxidationskatalysator - auch ein Speicherkatalysator der in Rede stehenden Art (LNT) ein Abgasnachbehandlungssystem, welches die Fähigkeit aufweist, unverbrannte Kohlenwasserstoffe (HC) zu oxidieren. Dadurch, daß die Beschichtung eines Speicherkatalysators auch Komponenten aufweist, die in der Regel bei einem Oxidationskatalysator eingesetzt werden, kommt es zur Oxidation von im Abgas befindlichen unverbrannten Kohlenwasserstoffen, wenn das Abgas durch einen Speicherkatalysator hindurchströmt.

Die hohen Abgastemperaturen führen nicht nur bei einem Speicherkatalysator, sondern auch bei einem Oxidationskatalysator zu einer thermischen Alterung und mit zunehmender Betriebsdauer zu einer Einschränkung der Funktionstüchtigkeit d. h. zu einer Abnahme der Konvertierungsraten.

Untersuchungen haben gezeigt, daß in einigen Anwendungsfällen höhere Temperaturen zur Oxidation unverbrannter Kohlenwasserstoffe erforderlich werden können als die weiter oben bereits genannten Mindesttemperaturen von 150°C bis 250°C, was die Alterung eines Oxidationskatalysators erheblich beschleunigen kann.

Beispielsweise können innermotorische Maßnahmen zur Realisierung eines unterstöchiometrischen Betriebs (λ < 1) der Brennkraftmaschine - ob zur Erhöhung der Abgastemperatur oder aber für eine Abgasanreicherung zur Reinigung oder Entschwefelung des LNT - grundsätzlich zu erhöhten Methan-Emissionen (CH₄) führen. Soll nun dieses Methan bei Durchtritt durch den Oxidationskatalysator oxidiert werden, ist die Vorgabe einer wesentlich höheren Temperatur von 500°C bis 550°C erforderlich.

Wie vorstehend ausführlich beschrieben, nimmt der Wirkungsgrad eines Oxidationskatalysators und eines Speicherkatalysators mit zunehmender Betriebsdauer ab, so daß Konzepte erforderlich werden, um diese Abgasnachbehandlungssysteme bzw. ihre Funktionstüchtigkeit zu überwachen und unerwünscht hohe Schadstoffemissionen infolge eingeschränkter Funktionstüchtigkeit bzw. mangelnder Konvertierung zu vermeiden. Obwohl die derzeitigen Grenzwerte für Schadstoffemissionen eine On-Board-Diagnose (OBD) nicht zwingend erfordern, könnten zukünftige Grenzwerte derartige Konzepte erforderlich machen.

Vor diesem Hintergrund ist es die Aufgabe der vorliegenden Erfindung, ein Verfahren aufzuzeigen, mit dem die Funktionstüchtigkeit eines Abgasnachbehandlungssystems, welches die Fähigkeit aufweist, unverbrannte Kohlenwasserstoffe (HC) zu oxidieren, überwacht wird.

Gelöst wird diese Aufgabe durch ein Verfahren zur Überwachung eines Abgasnachbehandlungssystems einer Brennkraftmaschine mit mindestens einem Zylinder, welches die Fähigkeit aufweist, unverbrannte Kohlenwasserstoffe (HC) zu oxidieren, und in einer Abgasleitung zum Abführen der Abgase aus dem mindestens einen Zylinder vorgesehen ist, bei dem
■ stromaufwärts des Abgasnachbehandlungssystems eine erste Lambda-Sonde zur Erfassung des Luftverhältnisses λ_{1,mess} angeordnet wird,
■ stromabwärts des Abgasnachbehandlungssystems eine zweite Lambda-Sonde zur Erfassung des Luftverhältnisses λ_{2,mess} angeordnet wird,
■ zur Überprüfung der Funktionstüchtigkeit des Abgasnachbehandlungssystems die Brennkraftmaschine in einen Betrieb überführt wird, in dem die aus dem mindestens einen Zylinder abgeführten Abgase eine derart hohe Konzentration an unverbrannten Kohlenwasserstoffen (HC) aufweisen, daß die erste Sonde fehlerhaft arbeitet, in der Art, daß diese erste Sonde ein - im Vergleich zu dem tatsächlich im Abgas vorliegenden Luftverhältnis λₜₐₜ - höheres Luftverhältnis λ_{1,mess} anzeigt, und
■ die Luftverhältnisse λ_{1,mess}, λ_{2,mess} der beiden Sonden miteinander verglichen werden, wobei
■ von einer Funktionsuntüchtigkeit des Abgasnachbehandlungssystems ausgegangen wird, falls die beiden Luftverhältnisse λ_{1,mess}, λ_{2,mess} im wesentlichen gleichgroß sind (λ_{1,mess} / λ_{2,mess} ≈ 1), und
■ von einer zumindest teilweisen Funktionstüchtigkeit des Abgasnachbehandlungssystems ausgegangen wird, falls die beiden Luftverhältnisse λ_{1,mess}, λ_{2,mess} unterschiedlich groß sind mit λ_{1,mess} /λ_{2,mess} > 1.

Das erfindungsgemäße Verfahren nutzt ein meßtechnisches Fehlverhalten der Lambda-Sonden, welches dadurch zum Ausdruck kommt, daß eine derartige Sonde bei Überschreiten einer bestimmten HC-Konzentration im Abgas einen anderen Wert für das Luftverhältnis liefert als tatsächlich vorliegt, wobei die Sonde einen vom tatsächlichen Luftverhältnis λₜₐₜ abweichenden, höheren Wert für das Luftverhältnis λₘₑₛₛ als Meßgröße ausgibt. So liefert eine Lambda-Sonde beispielsweise bei einem unterstöchiometrischen Betrieb (λ < 1) der Brennkraftmaschine und einer HC-Konzentration von 10.000ppm im Abgas ein Luftverhältnis von λₘₑₛₛ = 0,95 als Meßgröße, obwohl tatsächlich nur ein Luftverhältnis λₜₐₜ = 0,85 vorliegt.

Der durch die HC-Konzentration im Abgas hervorgerufene Meßfehler d. h. die Abweichung des von der Sonde ermittelten Luftverhältnisses λₘₑₛₛ von dem tatsächlich vorliegenden Luftverhältnis λₜₐₜ korreliert mit der HC-Konzentration im Abgas, wobei ein Fehlverhalten der Sonde erst bei Überschreiten einer Mindestkonzentration beobachtet wird und der Meßfehler bzw. die Abweichung bei weiterer Erhöhung der HC-Konzentration mit zunehmender HC-Konzentration größer wird.

Dieses Fehlverhalten einer Lambda-Sonde wird nun erfindungsgemäß dazu verwendet, die Funktionstüchtigkeit eines - unverbrannte Kohlenwasserstoffe oxidierenden - Abgasnachbehandlungssystems zu überprüfen bzw. zu überwachen.

Zur Überprüfung der Funktionstüchtigkeit des Abgasnachbehandlungssystems wird die HC-Konzentration im Abgas bewußt in der Weise erhöht, daß die erste stromaufwärts des Abgasnachbehandlungssystems angeordnete Sonde fehlerhaft arbeitet. Dabei ergeben sich im wesentlichen zwei grundsätzliche Szenarien, die im folgenden kurz erläutert werden.

Falls das Abgasnachbehandlungssystem funktionsuntüchtig ist d. h. keine unverbrannten Kohlenwasserstoffe mehr oxidiert, ist die HC-Konzentration stromabwärts des Abgasnachbehandlungssystems im wesentlichen genau so groß wie stromaufwärts des Abgasnachbehandlungssystems, weshalb beide Lambda-Sonden denselben - mit einem gleichgroßen Meßfehler behafteten - Wert für das Luftverhältnis liefern. Von einer Funktionsuntüchtigkeit des Abgasnachbehandlungssystems kann demnach ausgegangen werden, falls die mittels der beiden Sonden ermittelten Luftverhältnisse λ_{1,mess}, λ_{2,mess} im wesentlichen gleichgroß sind. Es gilt: λ_{1,mess} / λ_{2,mess} ≈ 1.

Falls das Abgasnachbehandlungssystem hingegen weiterhin funktionstüchtig ist, werden die im Abgas befindlichen unverbrannten Kohlenwasserstoffe zumindest teilweise beim Durchströmen im Abgasnachbehandlungssystem oxidiert, weshalb die HC-Konzentration im Abgas stromabwärts des Abgasnachbehandlungssystems geringer sein wird als stromaufwärts des Systems.

Das mit der zweiten, stromabwärts des Abgasnachbehandlungssystems angeordneten Sonde ermittelte Luftverhältnis λ_{2,mess} muß dabei nicht zwingend dem tatsächlich vorliegenden Luftverhältnis λₜₐₜ entsprechen. Zumindest ist aber die Abweichung des stromabwärts erfaßten Luftverhältnisses λ_{2,mess} vom tatsächlich vorliegenden Luftverhältnis λₜₐₜ geringer als die Abweichung des stromaufwärts erfaßten Luftverhältnisses λ_{1,mess} vom tatsächlich vorliegenden Luftverhältnis λₜₐₜ.

Von einer zumindest teilweisen Funktionstüchtigkeit des Abgasnachbehandlungssystems muß demnach ausgegangen werden, falls die beiden Luftverhältnisse λ_{1,mess}, λ_{2,mess} unterschiedlich groß sind mit λ_{1,mess} / λ_{2,mess} > 1.

Dadurch wird die der Erfindung zugrunde liegende Aufgabe gelöst, nämlich ein Verfahren gemäß dem Oberbegriff des Anspruchs 1 aufzuzeigen, mit dem die Funktionstüchtigkeit eines Abgasnachbehandlungssystems, welches die Fähigkeit aufweist, unverbrannte Kohlenwasserstoffe (HC) zu oxidieren, überwacht wird.

Weitere vorteilhafte Verfahrensvarianten gemäß den Unteransprüchen werden im folgenden erläutert.

Vorteilhaft sind Ausführungsformen des Verfahrens, bei denen
■ von einer Funktionsuntüchtigkeit des Abgasnachbehandlungssystems ausgegangen wird, falls gilt: λ_{1,mess} / λ_{2,mess} < 1,05, und
■ von einer zumindest teilweisen Funktionstüchtigkeit des Abgasnachbehandlungssystems ausgegangen wird, falls gilt: λ_{1,mess} / λ_{2,mess} ≥ 1,05.

Vorteilhaft sind des weiteren Ausführungsformen des Verfahrens, bei denen
■ von einer Funktionsuntüchtigkeit des Abgasnachbehandlungssystems ausgegangen wird, falls gilt: λ_{1,mess} / λ_{2,mess} < 1,1, und
■ von einer zumindest teilweisen Funktionstüchtigkeit des Abgasnachbehandlungssystems ausgegangen wird, falls gilt: λ_{1,mess} / λ_{2,mess} ≥ 1,1.

Erfindungsgemäß wird grundsätzlich - wie oben erwähnt - von einer Funktionsuntüchtigkeit des Abgasnachbehandlungssystems ausgegangen, falls die beiden Luftverhältnisse λ_{1,mess}, λ_{2,mess} im wesentlichen gleichgroß sind. "Im wesentlichen" bedeutet dabei im Rahmen der vorliegenden Erfindung, daß die beiden mittels Sonde erfaßten Luftverhältnisse λ_{1,mess} und λ_{2,mess} entweder gleichgroß sind oder sich nur geringfügig unterscheiden.

Die beiden zuvor beschriebenen Verfahrensvarianten definieren einen Verhältniswert λ_{1,mess} / λ_{2,mess}, unterhalb dessen von einer Funktionsuntüchtigkeit des Abgasnachbehandlungssystems ausgegangen wird. Dadurch wird gleichzeitig festgelegt, was als geringfügiger Unterschied angesehen wird bzw. in welchen Fällen davon auszugehen ist, daß die beiden Luftverhältnisse gleichgroß sind.

Diese Vorgehensweise trägt dem Umstand Rechnung, daß ein Abgasnachbehandlungssystem, das zwar noch geringe Mengen an unverbrannten Kohlenwasserstoffen oxidiert, aber nicht mehr die Konvertierungsraten eines einwandfrei arbeitenden und voll funktionstüchtigen Abgasnachbehandlungssystem realisiert, auch nicht mehr als funktionstüchtiges Abgasnachbehandlungssystems anzusehen ist bzw. definitionsgemäß angesehen werden kann.

Eine Vorgehensweise, bei der das Abgasnachbehandlungssystem nur dann als funktionsuntüchtig angesehen wird, wenn gar keine unverbrannten Kohlenwasserstoffe mehr konvertiert werden und die Luftverhältnisse λ_{1,mess}, λ_{2,mess} identisch sind, wäre für die Praxis zu restriktiv d. h. stringent.

Es kann daher auch ein beliebiger Verhältniswert λ_{1,mess} /λ_{2,mess} als Grenzwert X_{Grenz} vorgegeben werden, bei dem noch von einer ausreichenden Tauglichkeit des Abgasnachbehandlungssystems zur Konvertierung unverbrannter Kohlenwasserstoffe ausgegangen wird. Für den praktischen Einsatz eines Abgasnachbehandlungssystems ist es nämlich - wie bereits oben erwähnt - weniger entscheidend, festzustellen, wann ein Abgasnachbehandlungssystem gar keine unverbrannten Kohlenwasserstoffe mehr oxidiert d. h. vollständig funktionsuntüchtig ist, als vielmehr zu detektieren, wann das Abgasnachbehandlungssystem die ihm zugewiesene Aufgabe nicht mehr zufriedenstellend d. h. in dem erforderlichen Umfang erfüllt und eine Instandsetzung bzw. ein Austausch des Systems zu erfolgen hat, um unzulässig hohe Schadstoffemissionen zu vermeiden. Beispielsweise könnte als Grenzwert X_{Grenz} festgelegt werden: X_{Grenz} =1,2 oder X_{Grenz} =1,3.

Aus den genannten Gründen sind Ausführungsformen des Verfahrens vorteilhaft, bei denen
■ von einer unzureichenden Tauglichkeit des Abgasnachbehandlungssystems zur Konvertierung unverbrannter Kohlenwasserstoffe ausgegangen wird, falls gilt: λ_{1,mess} / λ_{2,mess} < X_{Grenz}, und
■ von einer ausreichenden Tauglichkeit des Abgasnachbehandlungssystems zur Konvertierung unverbrannter Kohlenwasserstoffe ausgegangen wird, falls gilt: λ_{1,mess} / λ_{2,mess} ≥ X_{Grenz}.

Vorteilhaft sind Ausführungsformen des Verfahrens, bei denen zur Überprüfung der Funktionstüchtigkeit des Abgasnachbehandlungssystems die Brennkraftmaschine in einen unterstöchiometrischen Betrieb (λ <1) überführt wird.

Bei dieser Verfahrensvariante wird die HC-Konzentration im - aus dem mindestens einen Zylinder abgeführten - Abgas mittels einer innermotorischen Maßnahme erhöht. Diese Vorgehensweise umfaßt insbesondere auch das Nacheinspritzen von Kraftstoff.

Vorteilhaft sind aber auch Ausführungsformen des Verfahrens, bei denen zur Überprüfung der Funktionstüchtigkeit des Abgasnachbehandlungssystems Kraftstoff stromaufwärts der ersten Lambda-Sonde in die Abgasleitung eingebracht wird.

Mit der Einleitung der Einbringung bzw. der Einspritzung von Kraftstoff direkt in die Abgasleitung wird die Brennkraftmaschine in einen Betrieb überführt, in dem die aus dem mindestens einen Zylinder abgeführten Abgase eine erhöhte Konzentration an unverbrannten Kohlenwasserstoffen (HC) aufweisen. Innermotorische Maßnahmen können grundsätzlich ergänzend eingesetzt werden.

Es kann auch völlig auf innermotorische Maßnahmen zur Erhöhung der HC-Konzentration verzichtet werden, was den Vorteil hat, daß die Brennkraftmaschine beliebig betrieben werden kann d.h. unabhängig davon, ob gerade die Funktionstüchtigkeit des Abgasnachbehandlungssystems überprüft werden soll oder nicht und damit beispielsweise auch überstöchiometrisch (λ > 1).

Vorteilhaft sind Ausführungsformen des Verfahrens, bei denen zur Überprüfung der Funktionstüchtigkeit des Abgasnachbehandlungssystems die Brennkraftmaschine in einen Betrieb überführt wird, bei dem die HC-Konzentration in den Abgasen stromaufwärts der ersten Lambda-Sonde 7000ppm bzw. 8500ppm, vorzugsweise 10000ppm übersteigt.

Je größer die HC-Konzentration im Abgas ist, desto ausgeprägter ist die Meßungenauigkeit d. h. der Meßfehler einer Lambda-Sonde.

Vorteilhaft sind Ausführungsformen des Verfahrens, bei denen ein als Abgasnachbehandlungssystem dienender Oxidationskatalysator überwacht wird. Wie bereits eingangs beschrieben, ist es eine Hauptaufgabe des Oxidationskatalysators, die während der Verbrennung des Kraftstoff-Luft-Gemisches im Zylinder nicht verbrannten bzw. nicht vollständig oxidierten Bestandteile zu konvertieren d. h. zu oxidieren, um eine unerwünscht hohe bzw. unzulässig hohe Emission an unverbrannten Kohlenwasserstoffen und Kohlenmonoxid zu vermeiden.

Ein Oxidationskatalysator ist folglich d. h. aufgrund seiner Hauptfunktion ein Abgasnachbehandlungssystem, das besonders geeignet ist, durch eine Erhöhung der HC-Konzentration im Abgas in seiner Funktionstüchtigkeit überprüft bzw. überwacht zu werden.

Vorteilhaft sind auch Ausführungsformen des Verfahrens, bei denen ein als Abgasnachbehandlungssystem dienender Speicherkatalysator überwacht wird.

Wie im Zusammenhang mit dem Stand der Technik ausgeführt wurde, besitzt auch ein Speicherkatalysator die Fähigkeit, unverbrannte Kohlenwasserstoffe (HC) zu oxidieren, da die Beschichtung Komponenten aufweist, die den Oxidationsvorgang von unverbrannten Kohlenwasserstoffen und Kohlenmonoxid katalytisch unterstützen, beispielsweise Platin.

Dieser Umstand eröffnet daher die Möglichkeit, auch Speicherkatalysatoren bzw. die Funktionstüchtigkeit dieser Katalysatoren mit dem erfindungsgemäßen Verfahren zu überprüfen bzw. zu überwachen.

Vorteilhaft sind Ausführungsformen des Verfahrens, bei denen als Lambda-Sonden Breitbandsonden verwendet werden. Diese Sonden zeichnen sich dadurch aus, daß das Luftverhältnis über einen weiten Wertebereich - beispielsweise zwischen 0,7 und 7 - meßtechnisch erfaßt werden kann, was vorteilhaft und auch erforderlich sein kann, wenn direkteinspritzende Brennkraftmaschinen, insbesondere direkteinspritzende Dieselmotoren, Gegenstand der Betrachtungen sind.

Vorteilhaft sind Ausführungsformen des Verfahrens, bei denen die Differenz Δλ = (λ_{1,mess} - λ_{2,mess}) der beiden Luftverhältnisse ermittelt und zur Bestimmung der relativen Funktionstüchtigkeit des Abgasnachbehandlungssystems verwendet wird.

Bei dieser Verfahrensvariante wird nicht lediglich überprüft bzw. festgestellt, ob das Abgasnachbehandlungssystem funktionstüchtig ist oder nicht. Vielmehr wird eine Bewertung des Zustandes des Abgasnachbehandlungssystems vorgenommen.

Dabei wird davon ausgegangen, daß die Differenz Δλ mit der Leistungsfähigkeit des Abgasnachbehandlungssystems korreliert. Je höher die Konvertierungsrate des Abgasnachbehandlungssystems ist, desto größer wird auch die Differenz Δλ der beiden Luftverhältnisse sein. Umgekehrt wird die Differenz Δλ kleiner, falls die Leistungsfähigkeit des Abgasnachbehandlungssystems bzw. die Konvertierungsrate abnimmt.

Im folgenden wird die Erfindung gemäß den Figuren 1 bis 3 näher beschrieben. Hierbei zeigt:
- Fig. 1: schematisch die Abgasleitung einer Brennkraftmaschine mitsamt Abgasnachbehandlungssystem und Lambda-Sonden,
- Fig. 2a: in einem Diagramm die HC-Konzentration über der Zeit während der Überprüfung der Funktionstüchtigkeit des Abgasnachbehandlungssystems,
- Fig. 2b: in einem Diagramm das tatsächliche Luftverhältnis λₜₐₜ während der Überprüfung der Funktionstüchtigkeit des Abgasnachbehandlungssystems,
- Fig. 2c: in einem Diagramm das zu der in Figur 2a dargestellten HC-Konzentration korrespondierende Luftverhältnis für ein funktionstüchtiges Abgasnachbehandlungssystem,
- Fig. 2d: in einem Diagramm das zu der in Figur 2a dargestellten HC-Konzentration korrespondierende Luftverhältnis für ein funktionsuntüchtiges Abgasnachbehandlungssystem, und
- Fig. 3: in einem Diagramm die beiden mittels Sonde erfaßten Luftverhältnisse λ_{1,mess}, λ_{2,mess} über der Funktionsuntüchtigkeit des zu überwachenden Abgasnachbehandlungssystems.

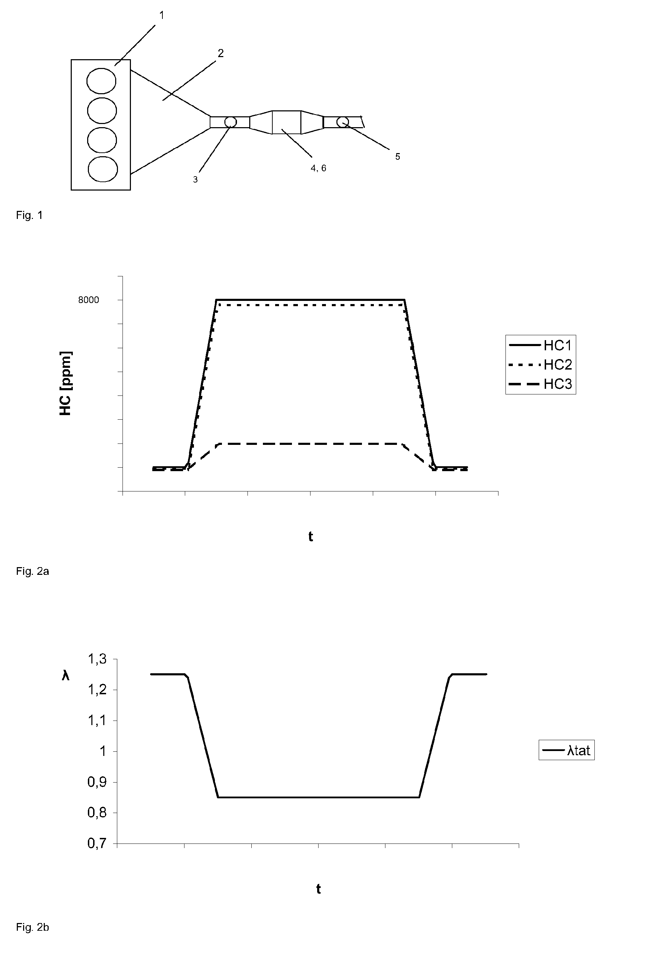

Figur 1 zeigt schematisch eine Brennkraftmaschine 1 mit vier Zylindern und einer Abgasleitung 2, mit der die Abgase aus den Zylindern abgeführt werden.

In der Abgasleitung 2 ist ein Abgasnachbehandlungssystem 4 vorgesehen, welches die Fähigkeit besitzt, unverbrannte Kohlenwasserstoffe (HC) zu oxidieren. Als Abgasnachbehandlungssystem 4 dient ein Oxidationskatalysator 6. Stromaufwärts und stromabwärts des Oxidationskatalysators 6 ist jeweils eine Lambda-Sonde 3, 5 zur Erfassung des Luftverhältnisses λ_{1,mess}, λ_{2,mess} angeordnet.

Figur 2a zeigt in einem Diagramm die HC-Konzentration über der Zeit während der Überprüfung der Funktionstüchtigkeit des Abgasnachbehandlungssystems. Zur Überprüfung der Funktionstüchtigkeit des Abgasnachbehandlungssystems wird die Konzentration an unverbrannten Kohlenwasserstoffen (HC) im Abgas erhöht.

Folglich steigt die Konzentration an unverbrannten Kohlenwasserstoffen HC₁ stromaufwärts des Abgasnachbehandlungssystems. Die Konzentration HC₂ bzw. HC₃ stromabwärts des Abgasnachbehandlungssystems ist davon abhängig, welche Menge der im Abgas befindlichen unverbrannten Kohlenwasserstoffen beim Durchströmen des Abgasnachbehandlungssystems oxidiert wird.

Ist das Abgasnachbehandlungssystem funktionsuntüchtig, kann die Konzentration an unverbannten Kohlenwasserstoffen im Abgas nicht reduziert werden, weshalb die Konzentration an unverbrannten Kohlenwasserstoffen HC₃ stromabwärts des funktionsuntüchtigen Abgasnachbehandlungssystems so hoch ist wie die Konzentration an unverbrannten Kohlenwasserstoffen HC₁ stromaufwärts des Abgasnachbehandlungssystems.

Ist das Abgasnachbehandlungssystem hingegen funktionstüchtig und fähig, unverbannte Kohlenwasserstoffe zu oxidieren, kann die Konzentration an unverbrannten Kohlenwasserstoffen HC₂ stromabwärts des Abgasnachbehandlungssystems gesenkt werden.

Figur 2b zeigt in einem Diagramm das tatsächliche Luftverhältnis λₜₐₜ während der Überprüfung der Funktionstüchtigkeit des Abgasnachbehandlungssystems.

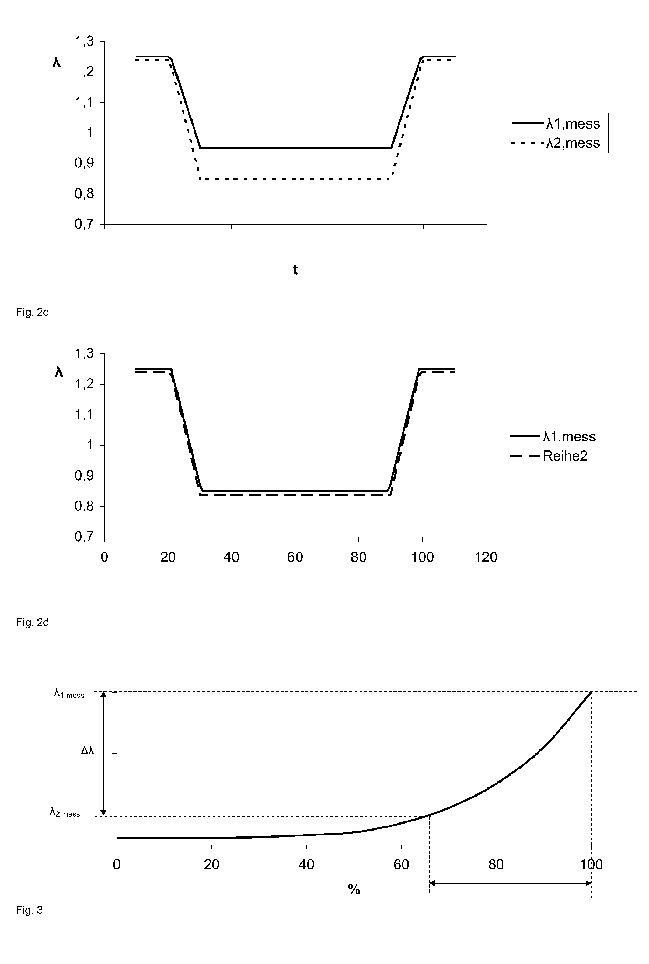

Korrespondierend zu den in Figur 2a dargestellten HC-Konzentrationen zeigt Figur 2b das tatsächliche Luftverhältnis (λₜₐₜ = 0,85) während der HC-Anreicherung, welches für das Abgas und in der gesamten Abgasleitung ein einheitliches Luftverhältnis ist im Gegensatz zu den mittels Sonden erfaßten Luftverhältnissen λ_{1,mess}, λ_{2,mess}, die in den Figuren 2c und 2d dargestellt sind.

Figur 2c zeigt in einem Diagramm die zu den in Figur 2a dargestellten HC-Konzentrationen HC₁ und HC₂ korrespondierenden mittels Sonden erfaßten Luftverhältnisse λ_{1,mess}, λ_{2,mess} für ein funktionstüchtiges Abgasnachbehandlungssystem. Hingegen zeigt Figur 2d diese mittels Sonden erfaßten Luftverhältnisse λ_{1,mess}, λ_{2,mess} bei funktionsuntüchtigem Abgasnachbehandlungssystem (HC₁ und HC₃).

Wie Figur 2c entnommen werden kann, liefert die stromaufwärts des Abgasnachbehandlungssystems angeordnete Lambda-Sonde aufgrund der erhöhten HC-Konzentration im Abgas einen vom tatsächlichen Luftverhältnis λₜₐₜ abweichenden Wert für das Luftverhältnis λ_{1,mess}. Dabei detektiert die Sonde ein höheres Luftverhältnis (λ_{1,mess} = 0,95) als tatsächlich vorliegt.

Der durch diese erhöhte HC-Konzentration im Abgas hervorgerufene Meßfehler der Sonde wird nun dazu verwendet, die Funktionstüchtigkeit des Abgasnachbehandlungssystems zu überprüfen.

Ist das Abgasnachbehandlungssystem funktionsuntüchtig, liefert die stromabwärts des Abgasnachbehandlungssystems angeordnete Sonde ebenfalls ein fehlerhaftes, überhöhtes Luftverhältnis (λ_{2,mess} = 0,95), wie in Figur 2d dargestellt.

Andernfalls - bei noch funktionstüchtigem Abgasnachbehandlungssystem - werden unverbrannte Kohlenwasserstoffe im Rahmen der Nachbehandlung oxidiert, weshalb die stromabwärts angeordnete Sonde ein niedrigeres und dem tatsächlichen Luftverhältnis ähnlicheres Luftverhältnis anzeigt. Werden ausreichend unverbrannte Kohlenwasserstoffe beim Durchströmen des Abgasnachbehandlungssystems konvertiert, liefert die zweite Sonde ein Luftverhältnis (λ_{2,mess} = 0,85), welches dem tatsächlich Luftverhältnis entspricht (siehe Figur 2c).

Figur 3 zeigt in einem Diagramm die beiden mittels Sonde erfaßten Luftverhältnisse λ_{1,mess}, λ_{2,mess} über der Funktionsuntüchtigkeit des zu überwachenden Abgasnachbehandlungssystems.

Das Luftverhältnis λ ist auf der Ordinate (y-Achse) und die Funktionsuntüchtigkeit auf der Abszisse (x-Achse) in % aufgetragen.

Ausgehend von einem Abgasnachbehandlungssystem, das voll funktionstüchtig ist (x = 0%), nimmt die Funktionstüchtigkeit des Systems mit zunehmender Betriebsdauer ab, was dadurch zum Ausdruck kommt, das die Differenz der beiden Luftverhältnisse Δλ = (λ_{1,mess} - λ_{2,mess}) kleiner wird. Vollständig funktionsuntüchtig (x = 100%) ist das Abgasnachbehandlungssystem, wenn beide Sonden ein gleichgroßes Luftverhältnis erfassen bzw. als Meßgröße liefern. Dann gilt: λ_{1,mess} = λ_{2,mess} bzw. Δλ = 0 und es werden keine unverbrannten Kohlenwasserstoffe mehr beim Durchströmen des Systems oxidiert.

Die Differenz Δλ = (λ_{1,mess} - λ_{2,mess}) der beiden Luftverhältnisse läßt Rückschlüsse zu auf die relative Funktionstüchtigkeit bzw. Funktionsuntüchtigkeit des Abgasnachbehandlungssystems. Der Zustand des Abgasnachbehandlungssystems kann auf diese Weise bewertet werden.

### Bezugszeichen

- 1: Brennkraftmaschine
- 2: Abgasleitung
- 3: erste Lambda-Sonde
- 4: Abgasnachbehandlungssystem
- 5: zweite Lambda-Sonde
- 6: Oxidationskatalysator

- HC: unverbrannte Kohlenwasserstoffe
- HC₁: Konzentration an unverbrannten Kohlenwasserstoffen stromaufwärts des Abgasnachbehandlungssystems
- HC₂: Konzentration an unverbrannten Kohlenwasserstoffen stromabwärts des voll funktionstüchtigen Abgasnachbehandlungssystems
- HC₃: Konzentration an unverbrannten Kohlenwasserstoffen stromabwärts des funktionsuntüchtigen Abgasnachbehandlungssystems
- ppm: parts per million
- t: Zeit

- λ: Luftverhältnis
- λ_{1,mess}: stromaufwärts des Abgasnachbehandlungssystems mittels Lambda-Sonde erfaßtes Luftverhältnis
- λ_{2,mess}: stromabwärts des Abgasnachbehandlungssystems mittels Lambda-Sonde erfaßtes Luftverhältnis,
- X_{Grenz}: Grenzwert für den Verhältniswert λ_{1,mess} /λ_{2,mess}
- λₜₐₜ: tatsächlich im Abgas vorliegendes Luftverhältnis
- Δλ: Differenz der beiden mittels Sonde erfaßten Luftverhältnisse λ_{1,mess}, λ_{2,mess}

## Patentansprüche

1. Verfahren zur Überwachung eines Abgasnachbehandlungssystems (4) einer Brennkraftmaschine (1) mit mindestens einem Zylinder, welches die Fähigkeit aufweist, unverbrannte Kohlenwasserstoffe (HC) zu oxidieren, und in einer Abgasleitung (2) zum Abführen der Abgase aus dem mindestens einen Zylinder vorgesehen ist, bei dem
■ stromaufwärts des Abgasnachbehandlungssystems (4) eine erste Lambda-Sonde (3) zur Erfassung des Luftverhältnisses λ_{1,mess} angeordnet wird,
■ stromabwärts des Abgasnachbehandlungssystems (4) eine zweite Lambda-Sonde (5) zur Erfassung des Luftverhältnisses λ_{2,mess} angeordnet wird,
■ zur Überprüfung der Funktionstüchtigkeit des Abgasnachbehandlungssystems (4) die Brennkraftmaschine (1) in einen Betrieb überführt wird, in dem die aus dem mindestens einen Zylinder abgeführten Abgase eine derart hohe Konzentration an unverbrannten Kohlenwasserstoffen (HC) aufweisen, daß die erste Sonde (3) fehlerhaft arbeitet, in der Art, daß diese erste Sonde (3) ein - im Vergleich zu dem tatsächlich im Abgas vorliegenden Luftverhältnis λₜₐₜ - höheres Luftverhältnis λ_{1,mess} anzeigt, und
■ die Luftverhältnisse λ_{1,mess}, λ_{2,mess} der beiden Sonden (3, 5) miteinander verglichen werden, wobei
■ von einer Funktionsuntüchtigkeit des Abgasnachbehandlungssystems (4) ausgegangen wird, falls die beiden Luftverhältnisse λ_{1,mess}, λ_{2,mess} im wesentlichen gleichgroß sind (λ_{1,mess} /λ_{2,mess} ≈ 1), und
■ von einer zumindest teilweisen Funktionstüchtigkeit des Abgasnachbehandlungssystems (4) ausgegangen wird, falls die beiden Luftverhältnisse λ_{1,mess}, λ_{2,mess} unterschiedlich groß sind mit λ_{1,mess} / λ_{2,mess} > 1.

2. Verfahren nach Anspruch 1, **dadurch gekennzeichnet, daß**
■ von einer Funktionsuntüchtigkeit des Abgasnachbehandlungssystems (4) ausgegangen wird, falls gilt: λ_{1,mess} / λ_{2,mess} < 1,05, und
■ von einer zumindest teilweisen Funktionstüchtigkeit des Abgasnachbehandlungssystems (4) ausgegangen wird, falls gilt: λ_{1,mess} / λ_{2,mess} ≥ 1,05.

3. Verfahren nach Anspruch 1, **dadurch gekennzeichnet, daß**
■ von einer Funktionsuntüchtigkeit des Abgasnachbehandlungssystems (4) ausgegangen wird, falls gilt: λ_{1,mess} / λ_{2,mess} < 1,1, und
■ von einer zumindest teilweisen Funktionstüchtigkeit des Abgasnachbehandlungssystems (4) ausgegangen wird, falls gilt: λ_{1,mess} / λ_{2,mess} ≥ 1,1.

4. Verfahren nach einem der vorherigen Ansprüche, **dadurch gekennzeichnet, daß** zur Überprüfung der Funktionstüchtigkeit des Abgasnachbehandlungssystems (4) die Brennkraftmaschine (1) in einen unterstöchiometrischen Betrieb (λ <1) überführt wird.

5. Verfahren nach einem der Ansprüche 1 bis 3, **dadurch gekennzeichnet, daß** zur Überprüfung der Funktionstüchtigkeit des Abgasnachbehandlungssystems (4) Kraftstoff stromaufwärts der ersten Lambda-Sonde (3) in die Abgasleitung (2) eingebracht wird.

6. Verfahren nach einem der vorherigen Ansprüche, **dadurch gekennzeichnet, daß** zur Überprüfung der Funktionstüchtigkeit des Abgasnachbehandlungssystems (4) die Brennkraftmaschine (1) in einen Betrieb überführt wird, bei dem die HC-Konzentration in den Abgasen stromaufwärts der ersten Lambda-Sonde (3) 7000ppm übersteigt.

7. Verfahren nach einem der vorherigen Ansprüche, **dadurch gekennzeichnet, daß** zur Überprüfung der Funktionstüchtigkeit des Abgasnachbehandlungssystems (4) die Brennkraftmaschine (1) in einen Betrieb überführt wird, bei dem die HC-Konzentration in den Abgasen stromaufwärts der ersten Lambda-Sonde (3) 8500ppm übersteigt.

8. Verfahren nach einem der vorherigen Ansprüche, **dadurch gekennzeichnet, daß** ein als Abgasnachbehandlungssystem (4) dienender Oxidationskatalysator (6) überwacht wird.

9. Verfahren nach einem der Ansprüche 1 bis 7, **dadurch gekennzeichnet, daß** ein als Abgasnachbehandlungssystem (4) dienender Speicherkatalysator überwacht wird.

10. Verfahren nach einem der vorherigen Ansprüche, **dadurch gekennzeichnet, daß** die Differenz Δλ = (λ_{1,mess} - λ_{2,mess}) der beiden Luftverhältnisse ermittelt und zur Bestimmung der relativen Funktionstüchtigkeit des Abgasnachbehandlungssystems (4) verwendet wird.
